# EUROPEAN PATENT APPLICATION

(11) **EP 4 641 800 A1**
(43) Date of publication of application: **29.10.2025**
(21) Application number: 24172660.3
(22) Date of filing: 26.04.2024
(51) Int. Cl.: H01M 50/342, H01M 50/503, H01M 50/507, H01M 10/613, H01M 10/625, H01M 10/658, H01M 50/209, H01M 50/35, H01M 50/383, H01M 50/519, H01M 50/521, H01M 50/593, H01M 50/293

(54) **BATTERY SYSTEM, ELECTRIC VEHICLE AND METHOD FOR ASSEMBLING THE BATTERY SYSTEM**

(71) Applicant: Samsung SDI Co., Ltd., Yongin-si, Gyeonggi-do 17084 (KR)
(72) Inventor: Naderer, Michael, 8530 Deutschlandsberg (AT); Haring, Fritz, 8600 Bruck / Mur (AT)
(74) Representative: Gulde & Partner

(57) **Abstract**

The present disclosure refers to a battery system (100). The battery system (100) includes a battery pack (10), a cell contacting unit, CCU, carrier (18) and a heat resistant cell protection cover (20). The battery pack (10) includes a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction. The CCU carrier (18) is disposed on the terminal side of each of the battery cells (12). The heat resistant cell protection cover (20) is arranged between the CCU carrier (18) and the battery cells (12), wherein the heat resistant cell protection cover (20) covers the venting valves (16) of the battery cells (12) and is adapted to rupture if venting products are ejected through a venting valve (16) from an inside of one of the battery cells (12).

## Description

### Field of the Disclosure

The present disclosure relates to a battery system and an electric vehicle including the battery system. Further, the present disclosure relates to a method for assembling the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a required amount of power and in order to realize a high-power rechargeable battery.

Battery modules can be constructed in either a block design or a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery in the related art is to let the venting gas stream discharged by the battery cell(s) expand into the battery housing and escape through a housing venting valve to the outside (e.g., to the environment of the battery housing). The venting gas stream thereby heats up the components inside the battery housing such as the other battery cells. For example, particles from the venting gas stream may deposit onto the battery cells which may lead to thermal propagation and may incite thermal runaway in adjacent battery cells. To protect the battery cells from this, a cover element may be provided covering the battery cells at their venting or terminal side.

Such a cover element may include venting openings in the form of through-holes that are aligned with the venting exits of the battery cells to let the venting gas stream pass through the cover element in case of a thermal runaway of one of the covered battery cells. After passing through the cover element, particles of the discharged venting gas stream may deposit onto the cover element. Thereby, however, particles of the venting gas stream may pass through another venting opening of the cover element that is aligned with the venting exit of one of the battery cells and may thus enter the other battery cell. This may lead to thermal propagation to the other battery cell and, in the worst case, incite a thermal runaway in the other battery cell.

To address this problem, the top cover of the battery cells may be provided with a thermal shield layer protecting against the hot gas flow and ejected particles during venting of a battery cell in case of thermal runaway. This shielding material needs to have a suitable thermal stability against temperatures above 500 °C (and above 600 °C for below 10 seconds) and also low mechanical stability to ensure proper venting without blocking the vent gas flow.

However, the application of the additional thermal shield layers onto the battery cells during assembly of the battery packs is cumbersome and can hardly be applied in an industrially standardized way like handling with vacuum.

It is thus an object of the present invention provide a simplified battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided including a battery pack including a plurality of battery cells each having a pair of electrode terminals and a venting valve disposed on a terminal side of the battery cells, wherein the terminal side of each of the battery cells faces a first side of the battery pack along a z-direction; a cell contacting unit, CCU, carrier disposed on the terminal side of each of the battery cells; and a heat resistant cell protection cover arranged between the CCU carrier and the battery cells, wherein the heat resistant cell protection cover covers the venting valves of the battery cells and is adapted to rupture if venting products are ejected through a venting valve from an inside of one of the battery cells.

According to an aspect of the present disclosure, the heat resistant cell protection cover is adapted to rupture at a pressure applied thereon of more than 10 bar.

According to an aspect of the present disclosure, wherein the CCU carrier includes a reinforcing structure for providing mechanical stability along the z-direction.

According to an aspect of the present disclosure, the reinforcing structure is a honeycomb structure.

According to an aspect of the present disclosure, the reinforcing structure is arranged on a side of the CCU carrier opposite to the heat resistant cell protection cover.

According to an aspect of the present disclosure, the CCU carrier and the heat resistant cell protection cover have a combined thickness of 5 to 8 mm in the z-direction.

According to an aspect of the present disclosure, the heat resistant cell protection cover is directly arranged on and/or attached to the CCU carrier.

According to an aspect of the present disclosure, the heat resistant cell protection cover is adapted to be of an elastic material and a thickness configured to provide a tolerance compensation caused by different heights of the battery cells in the z-direction.

According to an aspect of the present disclosure, the venting valve of each of the battery cells is arranged between the electrode terminals of the respective battery cell and the CCU carrier and the heat resistant cell protection cover are sized to be arranged in an area of the terminal sides of the battery cells between the electrode terminals of the battery cells or include openings for the electrode terminals.

According to an aspect of the present disclosure, the CCU carrier includes or consists of a ceramic and/or a high melting polymer compound.

According to an aspect of the present disclosure, the high melting polymer compound is a FR-4, polyamide, polyimide or a silicon resin.

According to an aspect of the present disclosure, the heat resistant cell protection cover includes or consists of anorganic fibers, an organic material and/or an aerogel.

According to an aspect of the present disclosure, the anorganic fibers are encapsulated rock or glass wool and/or the organic material is polyamide, polyimide or a silicon resin.

According to another aspect of the present disclosure, the present disclosure refers to an electric vehicle including the battery system according to any one of the preceding claims.

Yet another aspect of the present disclosure refers to a method for assembling a battery system as defined in any of the claims 1 to 13, wherein the method includes the steps of: a) providing a battery pack including a plurality of battery cells each having a pair of electrode terminals and a venting valve disposed on a terminal side of the battery cells, wherein the terminal side of each of the battery cells faces a first side of the battery pack along a z-direction; b) providing a cell contacting unit, CCU, carrier and a heat resistant cell protection cover; wherein the heat resistant cell protection cover is adapted to rupture if venting products are ejected through a venting valve from an inside of one of the battery cells; and c) disposing the CCU carrier on the terminal side of each of the battery cells of the battery pack such that the heat resistant cell protection cover is arranged between the CCU carrier and the battery cells and covers the venting valves of the battery cells.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic perspective top view of a battery system according to an embodiment of the present disclosure.
FIG. 2 illustrates a schematic perspective bottom view of a cell contacting unit carrier and a heat resistance cell protection cover of the battery system shown in FIG. 1.
FIG. 3 illustrates a schematic flow chart of a method for assembling the battery system shown in FIG. 1 according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a battery pack. The battery pack includes a plurality of battery cells. The battery cells of the plurality of battery cells each have a pair of electrode terminals and a venting valve disposed on a terminal side of the battery cells. The terminal side of each of the battery cells faces a first side of the battery pack along a z-direction. Each venting valve may be adapted to allow for a venting gas stream to be discharged from the respective battery cell during a thermal runaway of this battery cell. In other words, the venting valves may open upon a predefined pressure being exceeded. The venting valves are provided at or in venting exits, e.g. a venting hole, of the battery cells. The battery cells may be accommodated inside a battery housing of the battery pack and/or the battery system. The battery cells may be arranged, or stacked, along a stacking direction to form one or more cell stacks. The battery cells may be interconnected via electrical connecting means, for example, busbars, contacting respective electrode terminals of the battery cells to form one or more battery modules/battery packs. The battery cells may be arranged to form one or more battery packs, wherein in a battery pack the battery cells may be electrically interconnected, for example, in a series and/or in parallel as explained above. Multiple of these battery packs may form a battery module. The battery cells may, for example, be prismatic cells.

The battery system further includes a cell contacting unit, CCU, carrier disposed on the terminal side of each of the battery cells. The shape of the CCU carrier may be rectangular. The CCU carrier, however, is not limited to the rectangular shape. The CCU carrier may also be of any other kind of shape fitting to the battery pack, for example, square-shaped or ellipsoidal-shaped. The CCU carrier may include via electrical connecting means, for example, busbars, contacting respective electrode terminals of the battery cells to form one or more battery modules/battery packs. The CCU carrier may further include measuring lines for transmitting at least one physical property of the battery cells. The physical property may be, for example, voltage, current or temperature of the battery cells. The CCU carrier may be attached to the terminal side of each of the battery cells, e.g. by a fixation means such as a screw, bolt or an adhesive. For example, the CCU carrier may be directly attached to the terminal side of each of the battery cells. The CCU carrier may include openings aligned with the venting valves to form venting channels for conducting a hot venting gas stream discharged by a battery cell, e.g. during a thermal runaway, to the outside of the battery pack.

The battery system further includes a heat resistant cell protection cover arranged between the CCU carrier and the battery cells. The heat resistant cell protection cover provides additional heat protection, e.g. during a thermal runaway. The hot venting gas stream may heat up the components inside the battery housing such as the other battery cells. For example, particles from the venting gas stream may deposit onto the battery cells which may lead to thermal propagation and may incite thermal runaway in adjacent battery cells. To protect the battery cells from this, the heat resistant cell protection cover may be provided covering the battery cells at their terminal side, i.e. the heat resistant cell protection cover may be arranged such that it covers the plurality of battery cells at their terminal sides. For example, the heat resistant cell protection cover may cover the top side of the battery cells. The heat resistant insulation sheet may also cover the CCU carrier openings of the CCU carrier. The heat resistant cell protection cover may cover all of the battery cells of the plurality of battery cells, i.e. the heat resistant cell protection cover extends about the terminal sides of all of the battery cells of the plurality of battery cells. The heat resistant cell protection cover may be attached to the terminal side of each of the battery cells, e.g. by a fixation means such as a screw, bolt or an adhesive.

The heat resistant cell protection cover further covers the venting valves of the battery cells. The heat resistant cell protection cover is further adapted to rupture if venting products are ejected through a venting valve from an inside of one of the battery cells. In other words, the heat resistant cell protection cover rips apart or ruptures due to the discharged venting gas from a covered battery cell during a thermal runaway. Due to the rupture of the heat resistant cell protection cover, the venting gas stream can pass through the CCU carrier without being blocked by the heat resistant cell protection cover. After passing through the CCU carrier, particles of the discharged venting gas stream may deposit onto the CCU carrier and the heat resistant cell protection cover covering the venting valves of the other battery cells. Accordingly, the heat resistant cell protection cover may prevent particles of the venting gas stream from passing through the venting exits of the other battery cells and which may thus not enter the other battery cells. Therefore, thermal propagation to the other battery cells and the incitation of a thermal runaway in the other battery cells may be avoided or at least greatly reduced.

According to one embodiment, the heat resistant cell protection cover is adapted to rupture at a pressure applied thereon of more than 10 bar. In other words, the heat resistant cell protection cover is designed thinly or mechanically tearable so that the pressure of the venting stream, occurring when the venting valve opens due to a thermal runaway, pushes through the heat resistant cell protection cover. It is apparent that the pressure of the discharged venting stream may differ between different types, shapes and/or forms of the correspondingly used battery cells. Therefore, the heat resistant cell protection cover may also be adapted to rupture at a pressure applied thereon which corresponds to a characteristic pressure of the venting stream of the corresponding type, shape and/or form of the used battery cell during a thermal runaway.

According to another embodiment, the CCU carrier includes a reinforcing structure, such as reinforcing ribs, for providing mechanical stability along the z-direction. A certain amount of mechanical stability of the CCU carrier is required to ensure proper venting of the discharged venting stream occurred during a thermal runaway event. Thus, a collapsing of the structure of the CCU carrier due to the occurring pressure and a blocking of the venting stream can be prevented by using the reinforcing structure. The sections of the CCU carrier covering the venting valves of the battery cells, i.e. the openings of the CCU carrier, may be spared out with respect to the reinforcing structure to let the venting stream pass through the CCU carrier unobstructedly.

According to another embodiment, the reinforcing structure is a honeycomb structure. The honeycomb structure provides excellent mechanical stability. Honeycomb structures are structures that have the geometry of a honeycomb, e.g. to allow the minimization of the amount of used material to reach minimal weight and minimal material cost. The honeycomb structure includes an array of hollow cells formed between thin vertical walls, i.e. walls extending in the z-direction. The hollow cells may be columnar or hexagonal in shape. The honeycombs, i.e. the hollow cells, can also serve as deposit zones for ejected material, thereby reducing overall contamination of the battery pack.

According to another embodiment, the reinforcing structure is arranged on a (first) side of the CCU carrier opposite to the heat resistant cell protection cover. The reinforcing structure may be arranged directly on the (first) side of the CCU carrier opposite to the heat resistant cell protection cover. Since the reinforcing structure is located on the (first) side of the CCU carrier opposite to the heat resistant cell protection cover, the reinforcing structure may be protected from the venting products of the battery cell and the heat resistant cell protection cover can be easily arranged on or attached to the other side (second side) of the CCU carrier. For example, the CCU carrier may include a smooth surface on the (second) side of the heat resistant cell protection cover.

According to another embodiment, the CCU carrier and the heat resistant cell protection cover have a combined thickness of 5 to 8 mm in the z-direction. Even in the case in which the temperature of the venting products would be too high for the heat resistant cell protection cover and due to the venting event lasting only a few seconds in most of the times, the heat input is not sufficient to completely decompose the CCU carrier over its entire thickness. Although the CCU carrier and the heat resistant cell protection cover may be partially decomposed, e.g. for a few millimeters, there is still enough thickness remaining to ensure insulation of the battery cells, e.g. against electrically conducting particles in the venting gas.

According to another embodiment, the heat resistant cell protection cover is directly arranged on and/or attached to the CCU carrier. For example, the heat resistant cell protection cover is directly attached to the CCU carrier. In other words, the heat resistant cell protection cover and the CCU carrier may be subject to preassembly. That is, the heat resistant cell protection cover and the CCU carrier may be combined in advance, i.e. prior to assembly of the battery pack, in order to simplify the manufacturing of the battery pack. Accordingly, no additional step for placement of the heat resistant cell protection cover during the assembly of the battery pack is required anymore. For example, the heat resistant cell protection cover and the CCU carrier may be formed as a compound. The heat resistant cell protection cover may be applied directly onto the CCU carrier including the reinforcing structure, e.g. the honeycomb structure.

According to another embodiment, the heat resistant cell protection cover is adapted to be of an elastic material and a thickness configured to provide a tolerance compensation caused by different heights of the battery cells in the z-direction. A battery cell having an increased tolerance related height in the z-direction may come into contact with the heat resistant cell protection cover and may press into it which may generally lead to rupture of the heat resistant cell protection cover. However, such a rupture may be prevented because the heat resistant cell protection cover is adapted not to rupture based on tolerance related differences of the battery cells in the z-direction. Furthermore, as the heat resistant cell protection cover is arranged between the CCU carrier and the battery cells, its elasticity facilitates the fixation of the CCU carrier to the battery cells in z-direction. In other words, the heat resistant cell protection cover may be beneficial to guarantee a tolerance compensation caused by battery cell and manufacturing tolerances to guarantee a proper fixation in z-direction.

According to another embodiment, the venting valve of each of the battery cells is arranged between the electrode terminals of the respective battery cell. The CCU carrier and the heat resistant cell protection cover are sized to be arranged in an area of the terminal sides of the battery cells between the electrode terminals of the battery cells or include openings for the electrode terminals. In other words, the CCU carrier and the heat resistant cell protection cover fit into the area(s) between the electrode terminals of the battery cells and do not extend over or above the electrode terminals.

According to another embodiment, the CCU carrier includes or consists of a ceramic and/or a high melting polymer compound. These materials provide flame retardancy, high thermal stability and low ageing properties.

According to another embodiment, the high melting polymer compound is a FR-4, a polyamide, a polyimide or a silicon resin. These materials have sufficient stability over the general duration of a venting event, e.g. of around or less than 20 seconds. FR-4 is a NEMA grade designation for glass-reinforced epoxy laminate material. FR-4 is a composite material composed of woven fiberglass cloth with an epoxy resin binder that is flame resistant.

According to another embodiment, the heat resistant cell protection cover includes or consists of anorganic fibers, an organic material and/or an aerogel. These materials provide flame retardancy, high thermal stability and low ageing properties. Aerogel i.e. synthetic porous ultralight materials derived from a gel, easily rips apart during venting and does not deflect the venting gas flow, while providing excellent thermal insulation against hot venting gas particles.

According to another embodiment, the anorganic fibers are encapsulated rock or glass wool and/or the organic material is polyamide, polyimide or a silicon resin. These materials are good candidates which may be adapted to rupture if venting products are ejected through a venting valve from an inside of one of the battery cells.

The invention also pertains to an electric vehicle including a battery system according to the disclosure, for example as a traction battery.

Further, the invention pertains to a method for assembling a battery system, namely the above-mentioned battery system.

According to one step of the method, a battery pack including a plurality of battery cells each having a pair of electrode terminals and a venting valve disposed on a terminal side of the battery cells is provided. The terminal side of each of the battery cells face a first side of the battery pack along a z-direction.

According to another step of the method, a CCU carrier and a heat resistant cell protection cover, namely the above-mentioned CCU carrier and heat resistant cell protection cover, are provided. The heat resistant cell protection cover is adapted to rupture if venting products are ejected through a venting valve from an inside of one of the battery cells.

According to another step, the CCU carrier is disposed on the terminal side of each of the battery cells of the battery pack such that the heat resistant cell protection cover is arranged between the CCU carrier and the battery cells and such that the heat resistant cell protection cover covers the venting valves of the battery cells.

### Specific Embodiments

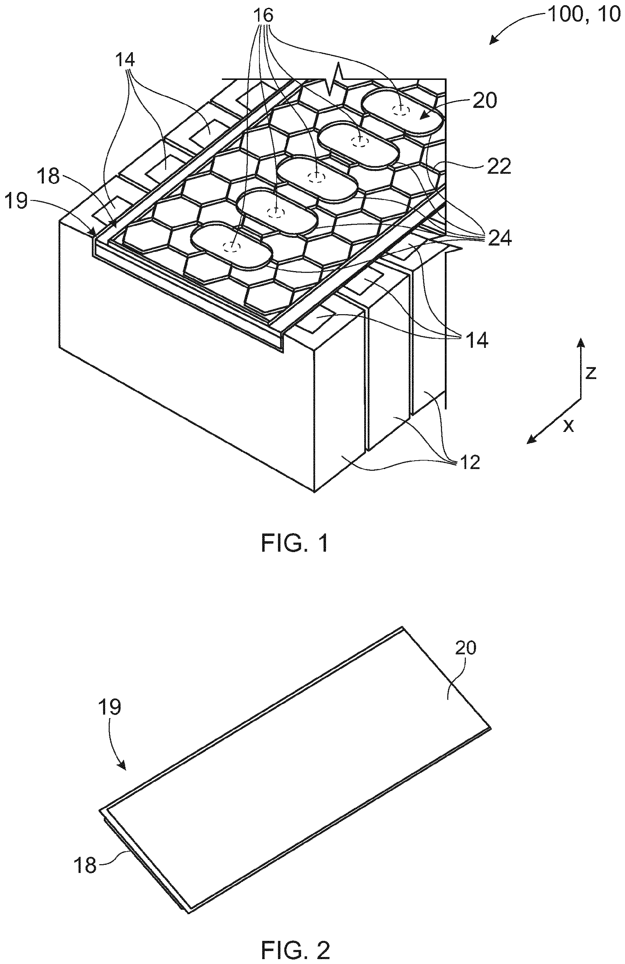

FIG. 1 depicts a schematic perspective top view of a battery system 100 according to an embodiment. FIG. 2 illustrates a schematic perspective bottom view of a cell contacting unit assembly 19 shown in FIG. 1.

The battery system 100 includes a battery pack 10 including a plurality of battery cells 12. For brevity reasons, the figures merely depict an example of the battery pack 10 with four battery cells 12. However, the chosen amount of battery cells 12 is merely exemplary and it is apparent that the battery pack 10 may include more or less than four battery cells 12. For example, the battery pack 10 may include 2, 3, 5, 6 or any arbitrary number of battery cells 12. The battery cells 12 are prismatic cells stacked along a stacking direction x to form a battery cell stack (see FIG. 1).

Each of the battery cells 12 has a pair of electrode terminals 14 and a venting valve 16 disposed therebetween on a terminal side of the battery cells 12. The terminal side of each of the battery cells 12 faces a first side of the battery pack 10 along a z-direction. In FIG. 1, the z-direction corresponds to the vertical direction of the image plane, i.e. from up to down or vice versa.

The battery system 100 further includes a cell contacting unit, CCU, assembly 19 disposed on the terminal side of each of the battery cells 12. The CCU assembly 19 includes a CCU carrier 18 and a heat resistant cell protection 20. The CCU carrier 18 and the heat resistant cell protection 20 may be integrated to provide mechanical and structural integrity as well as heat resistance within a single component in the CCU assembly 19. The heat resistant cell protection cover 20 is arranged between the CCU carrier 18 and the battery cells 12. The heat resistant cell protection cover 20 is arranged so as to cover the battery cells 12 at their terminal sides. That is, the heat resistant cell protection cover 20 covers the top side of the battery cells 12. The heat resistant cell protection cover 20 may extend about the terminal sides of the battery cells 12. Since the heat resistant cell protection cover 20 is arranged between the CCU carrier 18 and the battery cells 12, the CCU carrier 18 may be protected from direct venting gas discharged from the venting valves 16 of the battery cells 12 in case of a thermal runaway.

The heat resistant cell protection cover 20 is arranged to further cover the venting valves 16 of each of the battery cells 12. The CCU carrier 18 and the heat resistant cell protection cover 20 are sized to be arranged in an area of the terminal sides of the battery cells 12 between the electrode terminals 14 of the battery cells 12. In other words, the CCU carrier 18 and the heat resistant cell protection cover 20 fit into the area(s) between the electrode terminals 14 of the battery cells 12 and do not extend over or above the electrode terminals 14. Thus, a compact design of the battery pack 10 may be achieved.

Furthermore, the heat resistant cell protection cover 20 is adapted to rupture if venting products are ejected through a venting valve 16 from an inside of one of the battery cells 12. For example, the heat resistant cell protection cover 20 ruptures if a pressure of more than 10 bar is applied thereto. In other words, the heat resistant cell protection cover 20 rips apart or ruptures due to the discharged venting gas from a covered battery cell 12 during a thermal runaway. Due to the rupture of the heat resistant cell protection cover 20, the venting gas stream can pass through the CCU carrier 18 without being blocked by the heat resistant cell protection cover 20. After passing through the CCU carrier 18, particles of the discharged venting gas stream may deposit onto the CCU carrier 18 and the heat resistant cell protection cover 20 covering the venting valves 16 of the other battery cells 12. Accordingly, the heat resistant cell protection cover 20 prevents particles of the venting gas stream from passing through the venting valves 16 of the other battery cells 12 and which may thus not enter the other battery cells 12. Therefore, thermal propagation to the other battery cells 12 and the incitation of a thermal runaway in the other battery cells 12 can be avoided or at least greatly reduced.

As shown in FIG. 1, the heat resistant cell protection cover 20 is arranged directly between the CCU carrier 18 and the battery cells 12, i.e. the heat resistant cell protection cover 20 is in direct contact with the CCU carrier 18 and the battery cells 12. However, the heat resistant cell protection cover 20 is not limited thereto. The battery system 100 may further include additional layers which are arranged between the heat resistant cell protection cover 20 and the CCU carrier 18 and/or the battery cells 12 as well, i.e. the heat resistant cell protection cover 20 may also be in indirect contact with the CCU carrier 18 and/or the battery cells 12.

The CCU carrier 18 further includes a reinforcing structure 22, such as reinforcing ribs, for providing mechanical stability along the z-direction and CCU carrier openings 24 aligned with the venting valves 16, i.e. one opening 24 for each venting valve 16 of the battery cells 12, to form venting channels. That is, the sections of the CCU carrier 18 covering the venting valves 16 of the battery cells 12, are spared out with respect to the reinforcing structure 22 to let the venting stream pass through the CCU carrier 18 unobstructedly. A certain amount of mechanical stability of the CCU carrier 18 is required to ensure proper venting of the discharged venting stream occurred during a thermal runaway event. Thus, a collapsing of the structure of the CCU carrier 18 due to the occurring pressure and a blocking of the venting stream can be prevented by using the reinforcing structure 22. For example, as shown in FIG. 1, the reinforcing structure 22 is a honeycomb structure. The honeycomb structure includes an array of hollow cells formed between thin vertical walls, i.e. walls extending in the z-direction. The hollow cells are hexagonal in shape. The hollow cells can also serve as deposit zones for ejected material, thereby reducing overall contamination of the battery pack 10.

The reinforcing structure 22 is arranged on a first side of the CCU carrier 18 opposite to a second side of the CCU carrier 18, on which the heat resistant cell protection cover 20 is arranged. The first side of the CCU carrier 18 faces the first side of the battery pack 10 along the z-direction. In other words, the reinforcing structure 22 faces away from the battery cells 12. As shown in FIG. 2, the heat resistant cell protection cover 20 is arranged on the second side of the CCU carrier 18 facing the battery cells 12. The surface of the CCU carrier 18 on the second side is smooth, thereby facilitating attachment of the heat resistant cell protection cover 20 to the CCU carrier 18. For example, the heat resistant cell protection cover 20 and the CCU carrier 18 may be subject to preassembly. That is, the heat resistant cell protection cover 20 and the CCU carrier 18 may be combined in advance, i.e. prior to assembly of the battery pack 10 in order to simplify the manufacturing of the battery pack 10 and/or the battery system 100. Accordingly, no additional step for placement of the heat resistant cell protection cover 20 during the assembly of the battery pack 10 is required.

The shape of the heat resistant cell protection cover 20 may correspond to the shape of the CCU carrier 18 so that substantially the entire second side of the CCU carrier 18 facing the battery cells 12 is covered by the heat resistant cell protection cover 20. The shape of the CCU carrier 18 and/or the shape of the heat resistant cell protection cover 20 may be rectangular. The CCU carrier 18 and/or the heat resistant cell protection cover 20, however, are not limited to the rectangular shape. The CCU carrier 18 and/or the heat resistant cell protection cover 20 may also be of any other kind of shape fitting to the battery pack 10, for example, square-shaped or ellipsoidal-shaped.

The CCU carrier 18 and the heat resistant cell protection cover 20 have a combined thickness of 6 mm in the z-direction. However, the CCU carrier 18 and the heat resistant cell protection cover 20 may also have a combined thickness of about 5 to 8 mm in the z-direction. Even in the case in which the temperature of the venting products would be too high for the heat resistant cell protection cover 20 and due to the venting event lasting only a few seconds in most of the times, the heat input is not sufficient to completely decompose the CCU carrier 18 over its entire thickness. Although the CCU carrier 18 and the heat resistant cell protection cover 20 may be partially decomposed, e.g. for a few millimeters, there is still enough thickness remaining to ensure insulation of the battery cells 12, e.g. against electrically conducting particles in the venting gas.

The CCU carrier 18 consists of a high melting polymer compound, namely a FR-4, a polyamide, a polyimide or a silicon resin. However, the CCU carrier 18 may also include or consist of a ceramic. These materials provide flame retardancy, high thermal stability and low ageing properties.

The heat resistant cell protection cover 20 consists of an aerogel. Aerogel i.e. synthetic porous ultralight materials derived from a gel, easily rips apart during venting and does not deflect the venting gas flow, while providing excellent thermal insulation against hot venting gas particles. However, the heat resistant cell protection cover 20 may also includes or consists of anorganic fibers and/or an organic. These materials provide flame retardancy, high thermal stability and low ageing properties.

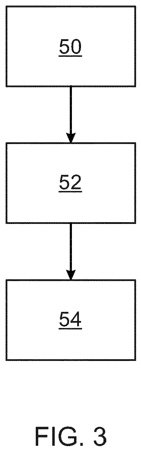

FIG. 3 illustrates a schematic flow chart of a method for assembling the battery system 100 shown in FIG. 1 according to an embodiment.

According to a first step 50 the above-mentioned battery pack 10 is provided, i.e. a battery pack 10 including a plurality of battery cells 12 each having a pair of electrode terminals 14 and a venting valve 16 disposed on a terminal side of the battery cells 12, wherein the terminal side of each of the battery cells 12 faces a first side of the battery pack 10 along a z-direction.

According to a second step 52 of the method, a CCU carrier 18 and a heat resistant cell protection cover 20 are provided. The CCU carrier 18 and the heat resistant cell protection cover 20 are the above-mentioned CCU carrier 18 and heat resistant cell protection cover 20. The heat resistant cell protection cover 20 is adapted to rupture if venting products are ejected through a venting valve 16 from an inside of one of the battery cells 12.

According to a third step 54 of the method, the UCC carrier 18 is disposed on the terminal side of each of the battery cells 12 of the battery pack 10 such that the heat resistant cell protection cover 20 is arranged between the CCU carrier 18 and the battery cells 12 and such that the heat resistant cell protection cover 20 covers the venting valves 16 of the battery cells 12.

### Reference signs

- 10: battery pack
- 12: battery cells
- 14: electrode terminals
- 16: venting valve
- 18: cell contacting unit carrier
- 19: cell contacting unit assembly
- 20: heat resistant cell protection cover
- 22: reinforcing structure
- 24: CCU carrier openings
- 50: first method step
- 52: second method step
- 54: third method step
- 100: battery system

## Claims

1. A battery system (100), comprising:
a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
a cell contacting unit, CCU, carrier (18) disposed on the terminal side of each of the battery cells (12); and
a heat resistant cell protection cover (20) arranged between the CCU carrier (18) and the battery cells (12), wherein the heat resistant cell protection cover (20) covers the venting valves (16) of the battery cells (12) and is adapted to rupture if venting products are ejected through a venting valve (16) from an inside of one of the battery cells (12).

2. The battery system (100) according to claim 1, wherein the heat resistant cell protection cover (20) is adapted to rupture at a pressure applied thereon of more than 10 bar.

3. The battery system (100) according to any one of the preceding claims, wherein the CCU carrier (18) comprises a reinforcing structure (22) for providing mechanical stability along the z-direction.

4. The battery system (100) according to claim 3 wherein the reinforcing structure (22) is a honeycomb structure.

5. The battery system (100) according to claims 3 or 4, wherein the reinforcing structure (22) is arranged on a side of the CCU carrier (18) opposite to the heat resistant cell protection cover (20).

6. The battery system (100) according to any one of the preceding claims, wherein the CCU carrier (18) and the heat resistant cell protection cover (20) have a combined thickness of 5 to 8 mm in the z-direction.

7. The battery system (100) according to any one of the preceding claims, wherein the heat resistant cell protection cover (20) is directly arranged on and/or attached to the CCU carrier (18).

8. The battery system (100) according to any one of the preceding claims, wherein the heat resistant cell protection cover (20) is adapted to be of an elastic material and a thickness configured to provide a tolerance compensation caused by different heights of the battery cells (12) in the z-direction.

9. The battery system (100) according to any one of the preceding claims, wherein the venting valve (16) of each of the battery cells (12) is arranged between the electrode terminals (16) of the respective battery cell (12) and the CCU carrier (18) and the heat resistant cell protection cover (20) are sized to be arranged in an area of the terminal sides of the battery cells (12) between the electrode terminals (16) of the battery cells (12) or comprise openings for the electrode terminals (16).

10. The battery system (100) according to any one of the preceding claims, wherein the CCU carrier (18) comprises or consists of a ceramic and/or a high melting polymer compound.

11. The battery system (100) according to claim 10, wherein the high melting polymer compound is a FR-4, polyamide, polyimide or a silicon resin.

12. The battery system (100) according to any one of the preceding claims, wherein the heat resistant cell protection cover (20) comprises or consists of anorganic fibers, an organic material and/or an aerogel.

13. The battery system (100) according to claim 12, wherein the anorganic fibers are encapsulated rock or glass wool and/or the organic material is polyamide, polyimide or a silicon resin.

14. An electric vehicle comprising the battery system (100) according to any one of the preceding claims.

15. A method for assembling a battery system (100) as defined in any of the claims 1 to 13, wherein the method comprises the steps of:
a) providing a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
b) providing a cell contacting unit, CCU, carrier (18) and a heat resistant cell protection cover (20); wherein the heat resistant cell protection cover (20) is adapted to rupture if venting products are ejected through a venting valve (16) from an inside of one of the battery cells (12); and
c) disposing the CCU carrier (18) on the terminal side of each of the battery cells (12) of the battery pack (10) such that the heat resistant cell protection cover (20) is arranged between the CCU carrier (18) and the battery cells (12) and covers the venting valves (16) of the battery cells (12).

## Amended claims

### Amended claims in accordance with Rule 137(2) EPC.

1. A battery system (100), comprising:
a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
a cell contacting unit, CCU, carrier (18) disposed on the terminal side of each of the battery cells (12), wherein the CCU carrier (18) comprises electrical connecting means contacting respective electrode terminals (14) of the battery cells (12) and a reinforcing structure (22) for providing mechanical stability along the z-direction, wherein the reinforcing structure (22) is arranged on a side of the CCU carrier (18) opposite to the heat resistant cell protection cover (20); and
a heat resistant cell protection cover (20) arranged between the CCU carrier (18) and the battery cells (12), wherein the heat resistant cell protection cover (20) covers the venting valves (16) of the battery cells (12) and is adapted to rupture if venting products are ejected through a venting valve (16) from an inside of one of the battery cells (12).

2. The battery system (100) according to claim 1, wherein the heat resistant cell protection cover (20) is adapted to rupture at a pressure applied thereon of more than 10 bar.

3. The battery system (100) according to claim 1, wherein the reinforcing structure (22) is a honeycomb structure.

4. The battery system (100) according to any one of the preceding claims, wherein the CCU carrier (18) and the heat resistant cell protection cover (20) have a combined thickness of 5 to 8 mm in the z-direction.

5. The battery system (100) according to any one of the preceding claims, wherein the heat resistant cell protection cover (20) is directly arranged on and/or attached to the CCU carrier (18).

6. The battery system (100) according to any one of the preceding claims, wherein the heat resistant cell protection cover (20) is adapted to be of an elastic material and a thickness configured to provide a tolerance compensation caused by different heights of the battery cells (12) due to battery cell manufacturing tolerances in the z-direction.

7. The battery system (100) according to any one of the preceding claims, wherein the venting valve (16) of each of the battery cells (12) is arranged between the electrode terminals (14) of the respective battery cell (12) and the CCU carrier (18) and the heat resistant cell protection cover (20) are sized to be arranged in an area of the terminal sides of the battery cells (12) between the electrode terminals (14) of the battery cells (12) or comprise openings for the electrode terminals (14).

8. The battery system (100) according to any one of the preceding claims, wherein the CCU carrier (18) comprises or consists of a ceramic and/or a high melting polymer compound.

9. The battery system (100) according to claim 8, wherein the high melting polymer compound is a FR-4, polyamide, polyimide or a silicon resin, wherein FR-4 is a material composed of woven fiberglass cloth with an epoxy resin binder that is flame resistant.

10. The battery system (100) according to any one of the preceding claims, wherein the heat resistant cell protection cover (20) comprises or consists of anorganic fibers, an organic material and/or an aerogel.

11. The battery system (100) according to claim 10, wherein the anorganic fibers are encapsulated rock or glass wool and/or the organic material is polyamide, polyimide or a silicon resin.

12. An electric vehicle comprising the battery system (100) according to any one of the preceding claims.

13. A method for assembling a battery system (100) as defined in any of the claims 1 to 11, wherein the method comprises the steps of:
a) providing a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
b) providing a cell contacting unit, CCU, carrier (18) and a heat resistant cell protection cover (20); wherein the CCU carrier (18) comprises electrical connecting means contacting respective electrode terminals (14) of the battery cells (12) and a reinforcing structure (22) for providing mechanical stability along the z-direction, wherein the reinforcing structure (22) is arranged on a side of the CCU carrier (18) opposite to the heat resistant cell protection cover (20), and wherein the heat resistant cell protection cover (20) is adapted to rupture if venting products are ejected through a venting valve (16) from an inside of one of the battery cells (12); and
c) disposing the CCU carrier (18) on the terminal side of each of the battery cells (12) of the battery pack (10) such that the heat resistant cell protection cover (20) is arranged between the CCU carrier (18) and the battery cells (12) and covers the venting valves (16) of the battery cells (12).
